# EUROPÄISCHE PATENTANMELDUNG

(11) **EP 3 496 342 A1**
(43) Veröffentlichungstag der Anmeldung: **12.06.2019**
(21) Anmeldenummer: 18210311.9
(22) Anmeldetag: 05.12.2018
(51) Int. Cl.: H04L 12/40, H04L 29/06, H04L 12/26

(54) **VORRICHTUNG UND VERFAHREN ZUM PRÜFEN DES SPEZIFIKATIONSGERECHTEN VERHALTENS VON STEUERGERÄTEN**

(30) Priorität: 06.12.2017 DE 102017128970
(71) Anmelder: Göpel electronic GmbH, 07745 Jena (DE)
(72) Erfinder: RAUH, Steffen, 07747 Jena (DE); SCHMIDT, Andreas, 07745 Jena (DE)
(74) Vertreter: Oehmke, Volker

(57) **Zusammenfassung**

Die Erfindung betrifft eine Vorrichtung und ein Verfahren zum Prüfen von Busteilnehmern eines CAN-Bus-Netzwerks (2).

Aufgabe der Erfindung ist es einen Tester (1) vorzuschlagen, der eine einfache und sichere Störung der von einem Steuergerät gesendeten Botschaften gewährleistet, selbst wenn nicht alle der gesendeten Botschaften bekannt sind.

Erfindungsgemäß wird die Aufgabe gelöst durch eine Vorrichtung (1) und ein Verfahren zum Prüfen des spezifikationsgerechten Verhaltens von Steuergeräten in einem CAN-Bus-Netzwerk im Falle der Störung von gesendeten Botschaften. Die Vorrichtung enthält ein Steuermodul (11), eine Schnittstelle (15) zum CAN-Bus-Netzwerk (3), ein Speichermodul (12) für die Hinterlegung einer Liste von Botschaften, eine Benutzerschnittstelle (14), und ein Störmodul (13), wobei die hinterlegte Liste nur Botschaften enthält, die das Störmodul (13) inaktiv schalten und alle nicht auf der Liste stehenden CAN-Bus-Botschaften das Störmodul (13) aktiv belassen.

## Beschreibung

Die Erfindung betrifft eine Vorrichtung und ein Verfahren zum Prüfen von Busteilnehmern eines CAN-Bus-Netzwerks.

Der CAN-Bus ist ein serieller Feldbus, der wegen seinen Eigenschaften in Bezug auf Störsicherheit und Übertragungsgeschwindigkeit in vielen Industriebereichen Anwendung finden kann. CAN-Bus-Netzwerke werden unter anderem auch bei sicherheitsrelevanten Systemen im Fahrzeugbau oder in der Medizintechnik eingesetzt, wo es im Fehlerfall darauf ankommt sicherheitskritische Zustände möglichst auszuschließen. Um solchen Zuständen vorzubeugen, bietet der CAN-Bus-Standard eine Reihe von Fehlerbehandlungsroutinen die das Auftreten von Übertragungsfehler verhindern, bzw. die aufgetretene Fehler bei der Übermittlung von Botschaften erkennen und korrigieren.

Entsprechend dieser Fehlerbehandlungsroutinen gibt es auf dem Markt eine Reihe von Testgeräten und Verfahren, mit denen die unterschiedlichsten Fehlerfälle geprüft werden können. Um das Verhalten oder die Funktion von Busteilnehmern eines CAN-Bus-Netzwerks im Fehlerfall zu untersuchen und um eine optimale Prüfumgebung zu schaffen, sind diese Testgeräte in der Lage, Teile des CAN-Bus-Netzwerks zu simulieren. In dieser Prüfumgebung können ausgewählte, reproduzierbare Störungen auf den CAN-Bus ausgeübt werden, um die Reaktion von Busteilnehmern auf diese Fehler zu prüfen und auszuwerten.

Für die Evaluierung eines den CAN-Bus-Spezifikationen entsprechenden Verhaltens von Busteilnehmern müssen derartige Testgeräte in der Lage sein, bestimmte Botschaften anhand von ausgewählten Bit-Mustern zu erkennen bzw. Inhalte von bestimmten Botschaften zu manipulieren. Mit den manipulierten Botschaften lassen sich zu testende Steuergeräte gezielt stören, wobei deren Reaktionen auf diese Fehler überprüft werden können. Als Beispiel sind hier die "CANstress D"-Module der VECTOR Informatik GmbH genannt, mit denen sich zuvor festgelegte Botschaften dominant oder rezessiv stören lassen, wobei die Störungen begrenzt oder unbegrenzt und in bestimmten Störfolgen abgesetzt werden können.

Ein dem CAN-Bus-Spezifikationen entsprechendes Verhalten ist beispielsweise die Reaktion eines Steuergeräts auf erkannte Sendefehler. Eine dafür vorgesehene Fehlerbehandlungsroutine sieht ein zyklisches, n-faches Wiederholen des Sendeversuchs einer als fehlerhaft erkannten Botschaft vor, wobei das n-fache Wiederholen in jedem Zyklus von einem Zähler begrenzt wird und zwischen einzelnen Zyklen Initialisierungs- und Wartephasen mit zunehmender Dauer vorgesehen sind. Zusätzlich zum wiederholten Senden wird bei ununterbrochen erfolglosen Sendewiederholungen die Dominanz der Fehlermeldung auf dem CAN-Bus reduziert, sodass das den Fehler verursachende Steuergerät am Ende der Fehlerbehandlungsroutine vollständig von der Bus-Kommunikation ausgeschlossen wird ("BusOff"-Zustand).

Um den spezifikationsgerechten Ablauf einer solchen Fehlerbehandlungsroutine bis zum "BusOff" zu überprüfen, ist es erforderlich die Sendeversuche des zu testenden Steuergeräts für die Zeitdauer, welche die Fehlerbehandlungsroutine für einen vollständigen Durchlauf benötigt, ununterbrochen zu Stören. Jede Unterbrechung dieser kontinuierlichen Störung würde das Erreichen des "BusOff" verzögern oder gänzlich verhindern, sodass die Fehlerbehandlungsroutine nicht vollständig geprüft werden kann.

Mit den aus dem Stand der Technik bekannten Testgeräten ist es möglich eine bestimmte Anzahl bzw. eine Liste an Botschaften festzulegen, die manipuliert werden sollen und mit denen ein zu testendes Steuergerät gezielt gestört werden kann. Zum vollständigen Stören dieses Steuergeräts müssen auf einer derartigen Liste alle Botschaften stehen, die das Steuergerät senden kann. Bei Steuergeräten, die sehr viele oder unbekannte Botschaften versenden, ist dies nicht möglich. Außerdem muss die Liste der zu störenden Botschaften für jedes Steuergerät individuell parametriert werden.

Aufgabe der Erfindung ist es einen Tester vorzuschlagen, der eine einfache und sichere Störung der von einem Steuergerät gesendeten Botschaften gewährleistet, selbst wenn nicht alle der gesendeten Botschaften bekannt sind.

Erfindungsgemäß wird die Aufgabe gelöst durch eine Vorrichtung zum Prüfen des spezifikationsgerechten Verhaltens von Steuergeräten in einem CAN-Bus-Netzwerk im Falle der Störung von gesendeten Botschaften. Die Vorrichtung enthält ein Steuermodul, eine Schnittstelle zum CAN-Bus-Netzwerk, ein Speichermodul für die Hinterlegung einer Liste von Botschaften, eine Benutzerschnittstelle, und ein Störmodul, wobei die hinterlegte Liste nur Botschaften enthält, die das Störmodul inaktiv schalten und alle nicht auf der Liste stehenden CAN-Bus-Botschaften das Störmodul aktiv belassen. Die Aufgabe wird weiterhin gelöst durch ein Verfahren zum Prüfen des spezifikationsgerechten Verhaltens von Steuergeräten in einem CAN-Bus-Netzwerk mit den Schritten:
- Ankoppeln einer Vorrichtung zum Prüfen des spezifikationsgerechten Verhaltens von Steuergeräten in einem CAN-Bus-Netzwerk, enthaltend ein Steuermodul, eine Schnittstelle zum CAN-Bus-Netzwerk, ein Speichermodul für die Hinterlegung einer Liste von Botschaften, eine Benutzerschnittstelle und ein Störmodul an ein CAN-Bus-Netzwerk mit mindestens einem zu testenden Steuergerät,
- Hinterlegung einer Liste von Botschaften in dem Speichermodul, wobei jede hinterlegte Botschaft geeignet ist das Störmodul inaktiv zu schalten,
- Vergleich jeder registrierten Botschaft des CAN-Bus-Netzwerkes mit den im Speichermodul hinterlegten Botschaften,
- Inaktiv-Schaltung des Störmoduls bei jeder Erkennung einer in der Liste hinterlegten Botschaft, so dass jede in der Liste stehende Botschaft nicht gestört wird,
- Aktiv-Schaltung des Störmoduls bei jeder Erkennung einer nicht in der Liste hinterlegten Botschaft, so dass jede nicht in der Liste stehende Botschaft im CAN-Bus-Netzwerks vom Störmodul gestört wird, und abschließend
- Prüfen des spezifikationsgerechten Verhaltens des getesteten Steuergeräts.

Nachfolgend soll die Erfindung anhand eines Ausführungsbeispiels näher erläutert werden. In den zugehörigen Zeichnungen zeigen:
- Fig. 1: einen schematischen Aufbau einer Vorrichtung zum Prüfen von Busteilnehmern eines CAN-Bus-Netzwerks 2, und
- Fig. 2: den prinzipiellen Ablauf eines Verfahrens zum Prüfen von Busteilnehmern eines CAN-Bus-Netzwerks 2.

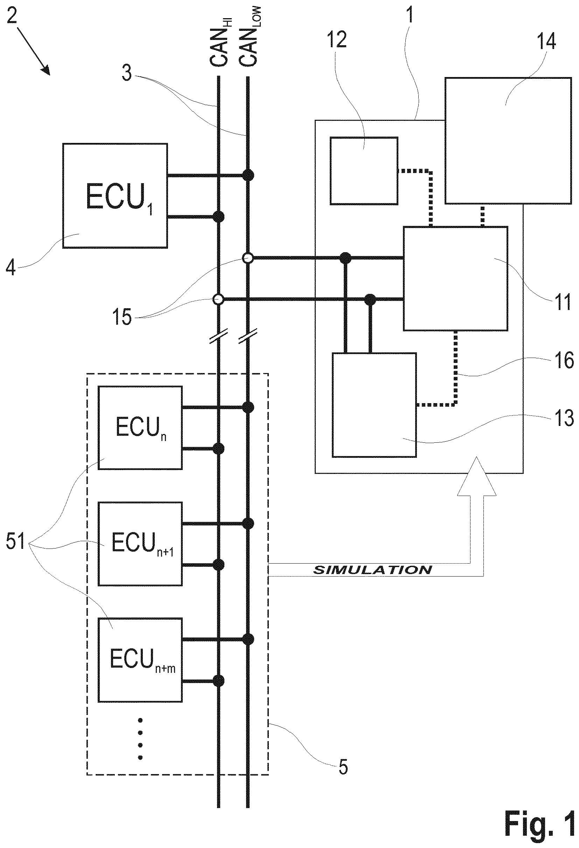

Die Vorrichtung zum Prüfen des spezifikationsgerechten Verhaltens eines zu testenden Steuergeräts 4 in einem CAN-Bus-Netzwerk 2 im Falle der Störung von gesendeten Botschaften, ist prinzipiell wie in Fig. 1 gezeigt aufgebaut. Sie enthält ein Steuermodul 11, ein Speichermodul 12, ein Störmodul 13, eine Benutzerschnittstelle 14 und eine Schnittstelle 15 zu einem CAN-Bus 3 des CAN-Bus-Netzwerks 2. Das Steuermodul 11, das Speichermodul 12, das Störmodul 13, die Benutzerschnittstelle 14 und die Schnittstelle 15 sind in einem Testgerät 1 zusammengefasst angeordnet. Zwischen dem Steuermodul 11 und dem Speichermodul 12, dem Störmodul 13 und der Benutzerschnittstelle 14 sind Daten- und Steuerleitungen 16 angeordnet. Über die Daten- und Steuerleitungen 16 sind Steuersignale und Daten austauschbar.

Das Testgerät 1 ist mit dem Steuermodul 11 und dem Störmodul 13 über die Schnittstelle 15 direkt am CAN-Bus 3 des CAN-Bus-Netzwerks 2 anschließbar. Der Zugriff des Testgeräts 1 auf den CAN-Bus 3 wird vom Steuermodul 11 kontrolliert. Das Speichermodul 12 und das Störmodul 13 werden ebenfalls mittels des Steuermoduls 11 kontrolliert. Für den Zugriff auf Steuerfunktionen des Steuermoduls 11, in Form einer Eingabe von Programmcode oder Benutzereingaben, ist die Benutzerschnittstelle 14 vorgesehen.

Das Störmodul 13 ist zum selektiven Stören von auf dem CAN-Bus 3 befindlichen Botschaften vorgesehen, wobei die Selektion entsprechender Botschaften durch das Steuermodul 11 erfolgt. Zum selektiven Stören kann das Störmodul 13 in zwei Zustände geschaltet werden, in einen aktiven Zustand, indem die Botschaften gestört werden und in einen inaktiven Zustand, indem die Botschaften nicht gestört werden.

Das Speichermodul 12 ist für die Hinterlegung einer Liste von Botschaften vorgesehen. Das können einzelne oder auch eine Vielzahl von Botschaften sein. Ein lesender oder schreibender Zugriff auf das Speichermodul 12 erfolgt über das Steuermodul 11 und wird von diesem gesteuert. Eine Eingabe der über das Steuermodul 11 in das Speichermodul 12 abzulegenden Botschaften erfolgt über die Benutzerschnittstelle 14 oder über die mit dem CAN-Bus 3 verbundene Schnittstelle 15. Erfindungswesentlich ist, dass die im Speichermodul 12 hinterlegte Liste nur Botschaften enthält, die das Störmodul 13 in den inaktiven Zustand schalten und alle nicht auf der Liste stehenden Botschaften das Störmodul 13 im aktiv Zustand belassen.

Zum Prüfen des spezifikationsgerechten Verhaltens des getesteten Steuergeräts 4, müssen alle vom Steuergerät 4 auf den CAN-Bus 3 gesendeten Botschaften sicher gestört werden. Gleichzeitig ist es erforderlich, dass das zu testende Steuergerät 4 weiterhin Botschaften empfangen kann. Durch das Empfangen von Botschaften wird es daran gehindert, während der laufenden Prüfung in einen Ruhezustand zu wechseln. Wie in Fig. 1 angedeutet und bereits aus dem Stand der Technik bekannt verfügt das Steuermodul 11 dazu über die Möglichkeit einen Restbus 5 zu simulieren, aus dem heraus virtuelle weitere Steuergeräte 51 Botschaften auf den CAN-Bus 3 senden, die das zu testende Steuergerät 4 empfangen kann.

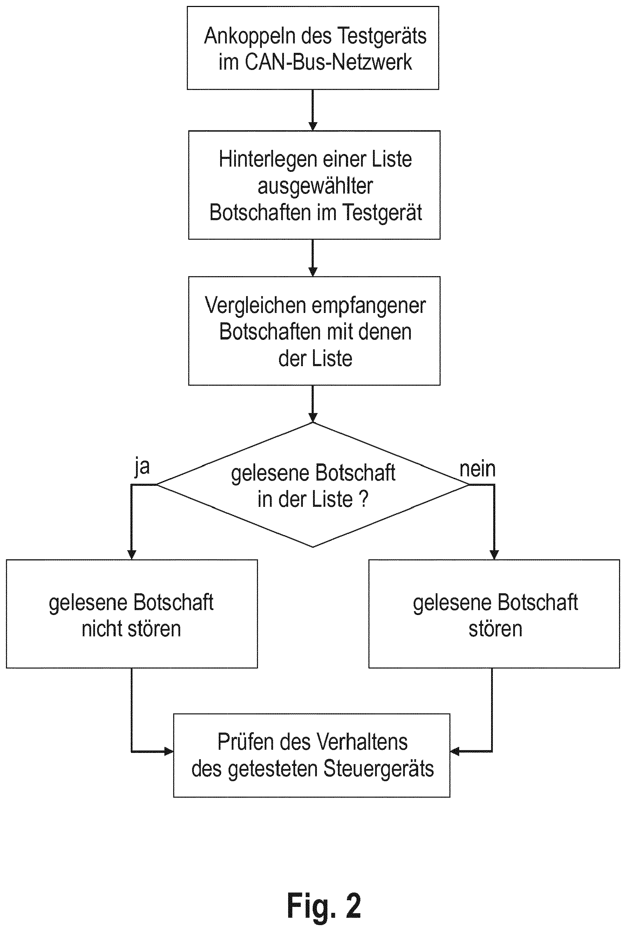

Ein möglicher Ablauf eines Verfahrens zum Prüfen des spezifikationsgerechten Verhaltens eines zu testenden Steuergeräts 4 mit einem erfindungsgemäßen Testgerät 1 in einem CAN-Bus-Netzwerk 2, ist in Fig. 2 dargestellt.

Ein den CAN-Bus-Spezifikationen entsprechendes Verhalten kann ein Durchlauf einer dafür vorgesehenen Fehlerbehandlungsroutine sein, die als Reaktion des getesteten Steuergeräts 4 auf eine von diesem gesendete und anschließend gestörte Botschaft gestartet wird. Die Fehlerbehandlungsroutine sieht ein zyklisches, n-faches Wiederholen der als fehlerhaft erkannten Botschaft vor, wobei zwischen den einzelnen Zyklen Initialisierungs- und Wartephasen mit zunehmender Dauer vorgesehen sind. Während eines Durchlaufs der Fehlerbehandlungsroutine werden vom getesteten Steuergerät 4 entsprechende Error frames generiert und in das CAN-Bus-Netzwerk 2 gesendet. Zum Ende der Fehlerbehandlungsroutine wird das den Fehler verursachende Steuergerät 4 vollständig von der Kommunikation im CAN-Bus-Netzwerk 2 ausgeschlossen und in einen "BusOff"-Zustand versetzt.

Der spezifikationsgerechte Durchlauf der Fehlerbehandlungsroutine bis zum "BusOff" des zu testenden Steuergeräts 4 beansprucht eine bestimmte Zeitdauer. Um den vollständigen Durchlauf zu erreichen muss während dieser Zeitdauer, ohne Ausnahme, jede vom Steuergerät 4 gesendete Botschaft gestört werden. Gleichzeitig ist es erforderlich das unter Störung stehende zu testende Steuergerät 4 daran zu hindern in einen Ruhezustand zu wechseln. Der Ruhezustand wird immer dann eingenommen, wenn das Steuergerät 4 bis zum Ablauf einer vorgegebenen Zeit nach dem Empfang einer Botschaft keine weiteren Botschaften aus dem CAN-Bus-Netzwerk 2 empfängt. Die Zeitdauer für den Durchlauf der Fehlerbehandlungsroutine ist in der Regel deutlich länger als die vorgegebene Zeit bis zum Einnehmen des Ruhezustands, sodass im CAN-Bus-Netzwerk 2 ständig Botschaften vorzuhalten sind, die nicht gestört werden und die vom zu testenden Steuergerät 4 empfangen werden können.

Zum sicheren Stören der gesendeten Botschaften wird in einem ersten Verfahrensschritt das Testgerät 1 an einen CAN-Bus 3 des CAN-Bus-Netzwerks 2 angekoppelt, in dem mindestens ein zu testendes Steuergerät 4 eingebunden ist. Die Ankopplung erfolgt an einer Schnittstelle 15 des Testgeräts 1 und ermöglicht dem Testgerät 1 das Senden von Botschaften auf den CAN-Bus 3 oder das Empfangen von auf dem CAN-Bus 3 vorhandenen Botschaften. Das Senden und Empfangen von Botschaften wird vom Testgerät 1 mittels eines Steuermoduls 11 gesteuert.

Zum Stören von Botschaften verfügt das Testgerät 1 über ein Störmodul 13, das vom Steuermodul 11 angesteuert wird. Mit dem Störmodul 13 ist das Testgerät 1 in der Lage, über die Schnittstelle 15, jede vom Steuermodul 11 vorgegebene Botschaft auf dem CAN-Bus 3 zu stören. Das Störmodul 13 kann zwei Zustände einnehmen. In einem aktiven Zustand des Störmoduls 13 wird prinzipiell jede vom Testgerät 1 über den CAN-Bus 3 empfangene Botschaft gestört. In einem inaktiven Zustand werden die vom Testgerät 1 über den CAN-Bus 3 empfangenen Botschaften nicht gestört.

Wie in der Beschreibung der Vorrichtung bereits erläutert, würde die Störung aller vom Steuergerät 4 gesendeten Botschaften beim zu testenden Steuergerät 4 zum Wechsel in den Ruhezustand führen, noch bevor der vollständige Durchlauf der Fehlerbehandlungsroutine erreicht ist. Eine Prüfung des spezifikationsgerechten Durchlaufs wäre dadurch nicht möglich.

Im nächsten Verfahrensschritt erfolgt deshalb die Hinterlegung einer Liste von Botschaften in einem Speichermodul 12 des Testgeräts 1. Jeder dieser ausgewählten Botschaften ist in der Lage das Störmodul 13 in den inaktiven Zustand zu schalten. Im inaktiven Zustand werden die vom Testgerät 1 über den CAN-Bus 3 empfangenen Botschaften nicht gestört. In dieser Liste sind alle Botschaften vorhanden, die nicht vom zu testendenden Steuergeräts 4 gesendet werden. Dazu gehören alle Botschaften, die von beliebigen anderen Busteilnehmern des Restbusses 5 gesendet werden.

Im folgenden Verfahrensschritt wird mittels des Steuermoduls 11 jede vom Testgerät 1 auf dem CAN-Bus 3 empfangene Botschaft mit den Botschaften der im Speichermodul 12 abgelegten Liste verglichen und das Störmodul 13 entsprechend in den aktiven oder inaktiven Zustand versetzt.

Bei allen empfangenen Botschaften die auch im Speichermodul 12 abgelegt sind, wird das Störmodul 13 inaktiv geschaltet. Diese Botschaften werden nicht gestört und verbleiben unverändert auf dem CAN-Bus 3. Sie tragen dazu bei, dass das Steuergerät 4 nicht den Ruhezustand wechseln kann.

Bei allen empfangenen Botschaften die nicht im Speichermodul 12 abgelegt sind, bleibt das Störmodul 13 aktiv, sodass diese Botschaften gestört werden und beim zu testenden Steuergerät 4 eine Fehlermeldung generieren bzw. das Starten oder Fortlaufen der Fehlerbehandlungsroutine bewirken.

Da es sich bei der Liste der Botschaften im Speichermodul 12 nicht um die gesendeten Botschaften des zu testendenden Steuergeräts 4 handelt, werden grundsätzlich alle anderen Botschaften gestört. Dazu zählen zum einen alle Botschaften des zu testendenden Steuergeräts 4, aber auch alle anderen Botschaften, die möglicherweise bisher unbekannt waren. Darunter fallen auch alle gesendeten Botschaften des zu testenden Steuergeräts 4, die bisher unbekannt waren.

In einem letzten Verfahrensschritt wird das spezifikationsgerechte Verhalten des getesteten Steuergeräts 4 überprüft. Anhand des Erreichens des "BussOff"-Zustands und der dazu erforderlichen Zeit wird festgestellt, ob die Fehlerbehandlungsroutine vollständig und spezifikationsgerecht durchlaufen wurde.

Gegenüber bisher bekannten Vorrichtungen und Verfahren, bei denen in der Liste zwingend alle Botschaften hinterlegt werden müssen die auch gesendete Botschaften des zu testenden Steuergeräts 4 sind, schließt die hier vorgeschlagene Vorrichtung und das Verfahren Fehler durch das Auftreten bisher unbekannter gesendeter Botschaften zuverlässig und auf einfache Weise aus.

### Bezugszeichenliste

- 1: Testgerät
- 11: Steuermodul
- 12: Speichermodul
- 13: Störmodul
- 14: Benutzerschnittstelle
- 15: Schnittstelle
- 16: Daten- und Steuerleitungen
- 2: CAN-Bus-Netzwerk
- 3: CAN-Bus
- 4: Steuergerät
- 5: Rest-Bus
- 51: weitere Steuergeräte

## Patentansprüche

1. Vorrichtung zum Prüfen des spezifikationsgerechten Verhaltens von Steuergeräten (4) in einem CAN-Bus-Netzwerk (2) im Falle der Störung von gesendeten Botschaften, enthaltend ein Steuermodul (11), eine Schnittstelle (15) zum CAN-Bus-Netzwerk (2), ein Speichermodul (12) für die Hinterlegung einer Liste von Botschaften, eine Benutzerschnittstelle (14), und ein Störmodul (13), **dadurch gekennzeichnet, dass** die hinterlegte Liste nur Botschaften enthält, die das Störmodul (13) inaktiv schalten und alle nicht auf der Liste stehenden Botschaften das Störmodul (13) aktiv belassen.

2. Verfahren zum Prüfen des spezifikationsgerechten Verhaltens von Steuergeräten (4) in einem CAN-Bus-Netzwerk (2) mit den Schritten:
- Ankoppeln der Vorrichtung nach Anspruch 1 an ein CAN-Bus-Netzwerk (2) mit mindestens einem zu testenden Steuergerät (4),
- Hinterlegung einer Liste von Botschaften in dem Speichermodul (12), wobei jede hinterlegte Botschaft geeignet ist das Störmodul (13) inaktiv zu schalten,
- Vergleich jeder registrierten Botschaft des CAN-Bus-Netzwerkes (2) mit den im Speichermodul (12) hinterlegten Botschaften,
- bei Erkennung einer in der Liste hinterlegten Botschaft wird das Störmodul (13) inaktiv geschaltet, so dass diese registrierte Botschaft nicht gestört wird,
- bei jeder Erkennung einer nicht in der Liste hinterlegten Botschaft ist das Störmodul (13) aktiv, so dass die registrierte Botschaft im CAN-Bus-Netzwerks (2) vom Störmodul (13) gestört wird, und
- Prüfen des spezifikationsgerechten Verhaltens des getesteten Steuergeräts (4).
